# EUROPÄISCHE PATENTANMELDUNG

(11) **EP 4 699 435 A1**
(43) Veröffentlichungstag der Anmeldung: **25.02.2026**
(21) Anmeldenummer: 24196155.6
(22) Anmeldetag: 23.08.2024
(51) Int. Cl.: A01D 78/02

(54) **VORRICHTUNG UND VERFAHREN ZUM ABHEBEN UND ABLEGEN DES MÄHGUTS UM DEN TROCKNUNGSVORGANG ZU BESCHLEUNIGEN**

(71) Anmelder: Rapid Technic AG, 8956 Killwangen (CH)
(72) Erfinder: Merkofer, Jonas, 5082 Kaisten (CH); Häfeli, Christian, 6332 Hagendorn (CH)
(74) Vertreter: Fenner, Seraina

(57) **Zusammenfassung**

Vorrichtung und Verfahren zum Abheben und anschliessenden lockeren Ablegen des auf dem Boden liegenden Mähguts zum frontseitigen Anbau und antriebsverbunden an einer einachsigen, Holmen geführten Arbeitsmaschine beinhaltend einen Rahmen, wobei der Rahmen einen sich quer zur Arbeitsfahrtrichtung über die Arbeitsbreite erstreckenden Hauptträger und jeweils seitlich daran angeordnete Seitenteile aufweist, eine zwischen den Seitenteilen angeordnete sich quer zur Arbeitsfahrtrichtung über die Arbeitsbreite erstreckende, um eine Längsachse rotierende Zinkenwalze, wobei die Zinkenwalze eine Walze mit daran angeordneten Zinken aufweist, wobei die Zinken unverstellbar an der Walze angeordnet sind um das Mähgut vom Boden abzuheben, jeweils seitlich der Walze angeordnete Stützelemente und vorzugsweise einen sich über die Arbeitsbreite ersteckenden Abstreifer zum Abstreifen und lockeren Ablegen des mit den Zinken abgehobenen Mähguts, wobei die Zinken mit einem Nachlaufwinkel an der Walze angeordnet sind.

## Beschreibung

Die Erfindung betrifft eine Vorrichtung und ein Verfahren zum Abheben und anschliessenden lockeren Ablegen des auf dem Boden liegenden Mähguts zum frontseitigen Anbau und antriebsverbunden an einer einachsigen, Holmen geführten Arbeitsmaschine, beinhaltend einen Rahmen, wobei der Rahmen einen sich quer zur Arbeitsfahrtrichtung über die Arbeitsbreite erstreckenden Hauptträger und jeweils seitlich daran angeordnete Seitenteile aufweist, eine zwischen den Seitenteilen angeordnete sich quer zur Arbeitsfahrtrichtung über die Arbeitsbreite erstreckende, um eine Längsachse rotierende Zinkenwalze, wobei die Zinkenwalze eine Walze mit daran angeordneten Zinken aufweist, wobei die Zinken unverstellbar bzw. fest an der Walze angeordnet sind um das Mähgut vom Boden abzuheben, jeweils seitlich der Walze angeordnete Stützelemente und einen sich über die Arbeitsbreite ersteckenden Abstreifer zum Abstreifen und lockeren Ablegen des mit den Zinken abgehobenen Mähguts.

Aus dem Stand der Technik sind Heuzetter wie auch Bandrechen bekannt, die an einachsige Holmen geführte Arbeitsmaschinen zum Wenden des Mähguts angekoppelt werden. Aufgrund der ausladenden und massiven Bauweise und der Lockerungstechnik bzw. der Rotationsweise dieser Vorrichtungen, ist es üblich diese Vorrichtungen mit der daran angekoppelten Arbeitsmaschine hinter sich her zu führen, so dass die Bedienperson beim Zett- oder Wendevorgang immer retourgehen oder zurückblicken muss, um den Arbeitsvorgang unter Kontrolle zu haben, was bei unwegsamem Gelände den Vorgang nochmals erschwert und das Unfallrisiko erhöht. Würde man die Arbeitsmaschine mit den heutig bekannten Vorrichtungen vor sich her führen, wäre die Maschine kaum lenk- und überschaubar.

Aus der CH 381 464 ist eine Heuerntemaschine bekannt, die ein quer zur Arbeitsfahrtrichtung laufenden Bandrechen aufweist, der das Mähgut auf die Seite der Heuerntemaschine fördert. Nachteilig hierbei ist, dass das Mähgut anstatt dass es über die ganze Arbeitsbreite zum weiteren Trocknen ausliegen kann, wird es auf eine schmalere Breite neben der Heuerntemaschine mittels des Bandrechens zusammengetragen

Aus der DE 10 2016 009 007 A1 ist eine Walze für eine landwirtschaftliche Aufnahmevorrichtung wie z.B. einen Ladewagen bekannt, die eine Zinkensteuerung aufweist, welche die Zinken abhängig von der Lage der Walze aus der Walze heraustreten lässt, um das Mähgut aufzunehmen und dass meist in der oberen Position die Zinken wieder in die Walze eingefahren werden um das Mähgut von den Zinken zu lösen und es weiter zu transportieren. Nachteilig hierbei ist die aufwendige und wartungsintensive Zinkensteuerung.

Es ist Aufgabe der Erfindung eine Vorrichtung und ein damit verbundenes Verfahren vorzuschlagen, das eine kompakte und leichte Vorrichtung zum Wenden bzw. Abheben und anschliessenden lockeren auf dem Boden ablegen des Mähguts vorsieht, mit der die Bedienperson nicht mehr rückwärtsgehen muss um das Mähgut zu sehen und die Vorrichtung im Blick zu haben, sondern die Bedienperson geradeaus nach vorne gerichtet gehen kann und die Vorrichtung dabei im Blick hat.

Diese Aufgabe wird erfindungsgemäss dadurch gelöst, dass die Zinken mit einem Nachlaufwinkel an der Walze angeordnet sind, wodurch das Abheben gegen hinten, unter der Zinkenwalze durch, in Richtung der Arbeitsmaschine erfolgt, und vorzugsweise durch den in Arbeitsfahrtrichtung gesehen hinter der Walze angeordnete Abstreifer, das Mähgut von der Zinkenwalze abgestreift, und im hinteren untern Bereich der Zinkenwalze ohne aufzuwickeln wieder losgelassen und locker über die komplette Arbeitsbreite abgelegt wird.

Die erfindungsgemässe Vorrichtung zum Abheben und anschliessenden lockeren Ablegen des auf dem Boden liegenden Mähguts zum frontseitigen Anbau und antriebsverbunden an einer einachsigen, Holmen geführten Arbeitsmaschine beinhaltet einen Rahmen, wobei der Rahmen einen sich quer zur Arbeitsfahrtrichtung über die Arbeitsbreite erstreckenden Hauptträger und jeweils seitlich bzw. an den beiden Stirnseiten des Hauptträgers angeordnete Seitenteile aufweist. Die erfindungsgemässe Vorrichtung beinhaltet zudem eine zwischen den Seitenteilen angeordnete, sich quer zur Arbeitsfahrtrichtung über die Arbeitsbreite erstreckende, um eine Längsachse rotierende Zinkenwalze. Die Zinkenwalze weist eine Walze mit daran angeordneten Zinken auf. Die Zinken sind unverstellbar an der Walze angeordnet bzw. fest an der Walze montiert, um das Mähgut vom Boden abzuheben. Die Zinken sind in Bezug zur Walze feststehend angeordnet. Um die erfindungsgemässe Vorrichtung auf dem Boden abzustützen sind jeweils seitlich der Walze Stützelemente angeordnet. Zudem weist die erfindungsgemässe Vorrichtung vorzugsweise einen sich über die Arbeitsbreite ersteckenden Abstreifer zum Abstreifen und lockeren Ablegen des mit den Zinken abgehobenen Mähguts, auf. Der Abstreifer ist vorzugsweis in Arbeitsfahrtrichtung hinter der Zinkenwalze angeordnet und streift das unter der Zinkenwalze durchgeförderte Mähgut von den Zinken ab. Die Zinken sind in einem Nachlaufwinkel zur Walze angeordnet. Dies ermöglicht es den Zinken sanft über den Boden zu streichen, das Mähgut unter der Zinkenwalze hindurch zu fördern und im hinteren unteren Bereich der Zinkenwalze ohne aufzuwickeln, wieder loszulassen. Zusätzlich hilft vorzugsweise der Abstreifer das Mähgut von den Zinken zu lösen wo dieses dann locker auf den Boden fällt. Mit dieser Anordnung der Zinken kann eine zusätzlich Zinkensteuerung vermieden werden, wodurch der Aufbau einer erfindungsgemässen Zinkenwalze einfach und wartungsarm ist. Neben dem Abheben und lockeren Ablegen des Mähguts wird das Mähgut mit der erfindungsgemässen Vorrichtung gleichzeitig vorzugsweise verzupft, aufgestellt, durchmischt, teilwiese gewendet, an- oder komplett geknickt und/oder verteilt, was einen guten Trocknungsprozess gewährleistet bzw. den Trocknungsprozess beschleunigt.

Es ist vorteilhaft, wenn die Antriebsmaschine über ihre herkömmliche Schnittstelle, meist eine Zapfwelle mit der erfindungsgemässen Vorrichtung über einen Antriebsstrang antriebsverbunden ist. Von dem Zentral angeordneten Antriebsstrang geht meist einseitig eine Antriebswelle ab, die einen seitlich am Rahmen bzw. am Seitenteil angeordneten Kettenantrieb antreibt, der dann wiederum die Zinkenwelle antreibt.

Es hat sich als vorteilhaft gezeigt, wenn die Zinken nicht ins Zentrum der Walze gerichtet sind bzw. die Zinken schräg bzw. geneigt zur Mittelachse angeordnet sind. Das heisst, dass die Zinken schräg versetzt zur Mittelachse verlaufen. Dadurch ergibt sich der Nachlaufwinkel. Das heisst, bei der Rotation der Zinkenwalze in Arbeitsfahrtrichtung und in Richtung mit den Zinken läuft die Befestigungsstelle des Zinkens an der Walze bzw. der Zinkenfuss der Zinkenspitze immer voraus, wodurch die Zinke über den Boden mitgeschleppt wird bzw. nachläuft.

Vorzugsweise sind die Zinken in einem geneigten Nachlaufwinkel α zur Mittelachse angeordnet. Dieser ermöglicht wie oben beschrieben, dass die Zinken beim über den Boden streifen, das Mähgut unter der Zinkenwalze durchfördern und mitabheben. Vorzugsweise liegt der Nachlaufwinkel α zwischen 10° und 50°.

Die Zinken sind zur Längsachse vorzugsweise in einem 90° Winkel ausgerichtet. Es ist vorteilhaft, wenn die Zinken senkrecht auf den jeweiligen Schenkel, an dem der Zinken angeordnet ist, ausgerichtet ist.

Als vorteilhaft hat sich gezeigt, dass die Zinken in Feldern an der Walze bzw. an der Aussenmantelfläche der Walze angeordnet sind. Mehrere Zinken bzw. eine Zinkenansammlung in einem Bereich der Walze bilden ein Feld und zwischen den einzelnen Feldern hat es leere Bereiche an der Walze, in denen keine Zinken angeordnet sind. Die Felder können mit gleich vielen Zinken ausgebildet oder aber auch eine unterschiedliche Menge an Zinken aufweisen. Die Felder können regelmässig oder auch unregelmässig über die Walze bzw. die Aussenmantelfläche der Walze angeordnet sein. Die Anordnung der Felder ist individuell auf das Mähgut abzustimmen. Mit der Anordnung der Zinken in Felder hat sich gezeigt, dass das Mähgut optimal gewendet wird, ohne dass es zu unerwünschten Mähgutansammlungen in Zwischenräumen oder auf der Zinkenwalze kommt. Selbstverständlich ist aber dennoch eine Verteilung der Zinken über die komplette Zinkenwalze möglich.

Als vorteilhaft hat sich gezeigt, wenn die Zinken aus Kunststoff sind, vorzugsweise einem Elastomer, speziell bevorzugt Gummi. Dadurch wird gewährleistet, dass die Zinken sich elastisch verformen lassen, wenn sie über den Boden gezogen werden und das Mähgut mitziehen. Zudem ermöglicht das eine gute Bodenanpassung da die Zinken, die unterschiedlichen Höhen über die Arbeitsbreite gut ausgleichen können. Aufgrund des elastischen Materials der Zinken wird auch die Grasnarbe geschont und der Bröckelverlust des getrockneten Mähguts ist gering, wie auch die Verschmutzung des Futters aufgrund des elastischen Zinkens, welcher weniger Fremdkörper mitnimmt.

Es ist vorteilhaft, wenn die Zinken einfach auswechselbar sind. Vorzugsweise sind die Zinken in die Walze einschraubbar und sind vorzugsweise zylindrisch an den Enden ausgebildet. Dies gewährleistet ein einfaches und schnelles Austauschen der Zinken

Als bevorzugte Ausführungsform hat sich gezeigt, wenn die Stützelemente als Gleitkufen ausgebildet sind. Diese ermöglichen eine sichere Führung der Vorrichtung auch in Steilhängen sowie einen einfachen und leichten Aufbau.

Um die erfindungsgemässe Vorrichtung auf unterschiedlichem Gelände und auf unterschiedliche Futtermassen anzupassen, sind die Stützelemente vorzugsweise höhenverstellbar ausgebildet. Somit kann die Intensität der Bearbeitung gesteuert und auf den Verschleiss der Zinken Einfluss genommen werden.

Vorzugsweise weist die Walze mindestens eine, vorzugsweise mehrere ringsum angeordnete, parallel zur Längsachse verlaufende, Abkantungen aufweisende, längs erstreckende Paneele auf. Wobei die Paneele eine rechtwinklig zur Längsachse verlaufende Krümmung aufweisen bzw. die rechtwinklig zur Längsachse ersteckende Seiten der Paneele weisen eine Bogenform auf, die einem Kreissegment der Walze entspricht. Die einzelnen Paneelen sind vorzugsweise über ihre parallel zur Längsachse verlaufenden Schenkel miteinander zu einer zylindrischen Walze verbunden. Vorzugsweise sind die einzelnen Paneelen über ihre beiden äusseren Schenkel miteinander zu einer Walze gefügt. Im Falle einer Paneele sind die beiden äusseren Schenkel miteinander zu einer Walze gefügt. Es ist vorteilhaft, wenn die miteinander zu einer Walze gefügten Paneelen identisch in ihren Abmassen sind. Die Walze ist vorzugsweise über die Arbeitsbreite zylindrisch ausgebildet. Die Walze weist vorzugsweise einen runden Querschnitt mit aneinandergereihten Abkantungen auf, wobei die Abkantungen entlang eines Kreises angeordnet sind. Die erfindungsgemässe Vorrichtung weist vorzugsweise ausschliesslich eine Walze, die sich über die Arbeitsbreite erstreckt auf.

Es ist vorteilhaft, wenn eine Paneele mindestens zwei parallel zur Längsachse verlaufende Abkantungen aufweist. Das heisst, dass vorzugsweise eine Paneele mindestens drei entlang der Längsachse verlaufende Schenkel aufweist.

Die Breiten der einzelnen Schenkel einer Paneele sind vorzugsweise gleich. Dies gewährleistet eine regelmässige Anordnung der Abkantungen entlang des Aussendurchmessers der Walze. Dies ermöglicht auch eine regelmässige Anordnung der Zinken am Aussendurchmesser der Walze.

Als vorteilhafte Ausführung hat sich gezeigt, wenn eine Paneele zwischen vier bis 14 parallel zur Längsachse verlaufende Abkantungen aufweist. Die Paneele weist aufgrund dessen vorzugsweise fünf bis 15 entlang der Längsachse verlaufende Schenkel auf.

Es ist vorteilhaft, wenn die Paneelen miteinander gefügt sind, vorzugsweise durch schweissen, nieten oder Schrauben. Dazu werden vorzugsweise die äusseren beiden Schenkel der Paneelen aufeinander gelegt und mit dem entsprechenden Fügeverfahren miteinander verbunden. Aufgrund der Krümmung der Paneele ergibt sich dann eine runde, zylindrische Walze mit Abkantungen entlang des Aussenumfangs.

Vorzugsweise sind die Paneelen jeweils aus einem Metallblech hergestellt. Vorzugsweise weist das Metallblech eine Stärke zwischen 1 bis 10 mm auf, was ein problemloses Abkanten gewährleistet.

Als bevorzugte Ausführung hat sich gezeigt, wenn die Paneelen aus jeweils einem Leichtmetallblech vorzugsweise aus Aluminium gebildet sind. Dies gewährleistet eine leichte Walze und ein einfaches Abkanten. Das Leichtmetallblech weist vorzugsweise eine Dicke zwischen 1 bis 10 mm auf.

Es ist vorteilhaft, wenn oberhalb des Abstreifers ein Prallblech zum Schutz der Bedienperson angeordnet ist. Dadurch ist die Bedienperson vor hochschiessenden Teilen, wie Steine oder Erdbrocken geschützt. Damit aber dennoch die Sicht auf die Vorrichtung gewährleistet ist, ist das Prallblech vorzugsweise aus Plexiglas oder einem anderen transparenten Material ausgebildet, was eine Verstopfung durch das Mähgut am Abstreifer schnell erkennen lässt.

Das erfindungsgemässe Verfahren zum Abheben und anschliessenden lockeren Ablegen des auf dem Boden liegenden Mähguts mit einer an einer einachsigen, Holmen geführten Arbeitsmaschine, frontseitig angebauten und antriebsverbundenen Vorrichtung, zeichnet sich dadurch aus, dass in Arbeitsfahrtrichtung gesehen eine vor der Arbeitsmaschine angeordnete in Arbeitsfahrtrichtung rotierende Zinkenwalze das Mähgut über die Arbeitsbreite vom Boden abhebt. Wobei das Abheben gegen hinten, unter der Zinkenwalze durch, in Richtung der Arbeitsmaschine erfolgt und im hinteren untern Bereich der Zinkenwalze ohne aufzuwickeln wieder losgelassen wird, oder auch durch den in Arbeitsfahrtrichtung gesehen hinter, der Zinkenwalze angeordneten Abstreifer das Mähgut von der Zinkenwalze abgestreift und locker über die komplette Arbeitsbreite abgelegt wird. Dadurch kann die Bedienperson hinter der Arbeitsmaschine hergehen und hat die Vorrichtung wie auch das Mähgut im Blick wodurch das Unfallrisiko vermindert wird. Zudem wird durch das erfindungsgemässe Verfahren das Mähgut neben dem Abheben und lockeren Ablegen gleichzeitig verzupft, aufgestellt, durchmischt, teilwiese gewendet, an- oder komplett geknickt und/oder verteilt. Das wiederum bringt eine Vergrösserung der Oberfläche des Mähguts mit sich bzw. eine grössere Angriffsfläche für die Sonneneinstrahlung und den Wind was den Trocknungsprozess unterstütz bzw. beschleunigt. Zudem ist es vorteilhaft, wenn das erfindungsgemässe Verfahren nach dem Mähen angewandt wird, um das Mähgut in seiner Ablage zu Verändern bzw. aufzulockern und neu abzulegen. Dies begünstigt auch den Folgeprozess des Aufnehmens bzw. Bergens des Mähguts da es sich leichter vom Boden abheben lässt.

Es ist vorteilhaft, dass die Rotationsrichtung der Zinkenwalze und die Arbeitsfahrtrichtung gleichgerichtet sind. Das heisst die Zinkenwalze wie auch die Räder der Antriebsmaschine drehen in dieselbe Richtung.

Als bevorzugte Ausführungsform hat sich gezeigt, dass das wieder abgelegte Mähgut mit den Rädern der Arbeitsmaschine überfahren wird. Dies kommt daher, dass nun die Bedienperson die Antriebsmaschine vor sich her führt und die Vorrichtung ist entsprechend vorne an der Antriebsmaschine angekoppelt, wodurch das Mähgut nach dem Abheben und locken Ablegen von der Antriebsmaschine überfahren wird, was jedoch keinen nachteiligen Einfluss auf das Mähgut und den Trocknungsprozess mit sich bringt. Aufgrund dessen, dass die Vorrichtung nur eine rotierende Zinkenwalze aufweist, ist es möglich die Vorrichtung kompakt und sehr leicht auszuführen, was das Handling erleichtert und vor allem in Steilhängen der Bedienperson zugutekommt, wie auch dass eine gute Übersicht über die komplette Arbeitsmaschine mit der erfindungsgemässen Vorrichtung gegeben ist.

Als vorteilhaft hat sich gezeigt, wenn sich die Zinken der Zinkenwalze während des Überstreifens über den Boden und des Abhebens des Mähguts vom Boden elastisch verformen. Dadurch schonen sie die Grasnarbe wie sie auch den Bröckelverlust des Mähguts minimieren. Zudem entsteht dadurch eine optimale Anpassung an die Bodengegebenheiten, so dass das Mähgut auch bei grösseren Unebenheiten zuverlässig angehoben und wieder abgelegt wird.

Alle Ausgestaltungmöglichkeiten sind untereinander frei kombinierbar sowie zur Vermeidung von Wiederholungen sich die Merkmale der Vorrichtung auch automatisch auf das Verfahren und umgekehrt beziehen.

Ein Ausführungsbeispiel der Erfindung wird anhand der Figuren beschrieben, wobei sich die Erfindung nicht nur auf das Ausführungsbeispiel beschränkt. Es zeigen:
- Fig. 1: eine Schnittansicht der erfindungsgemässen Vorrichtung mit der in Arbeitsfahrtrichtung gesehen dahinter angeordneten Arbeitsmaschine,
- Fig. 2: eine Draufsicht der erfindungsgemässen Vorrichtung,
- Fig. 3: eine Explosionsansicht der erfindungsgemässen Vorrichtung und
- Fig. 4: einen Detailschnitt einer Paneelenverbindungsstelle und eine Zinkenbefestigung

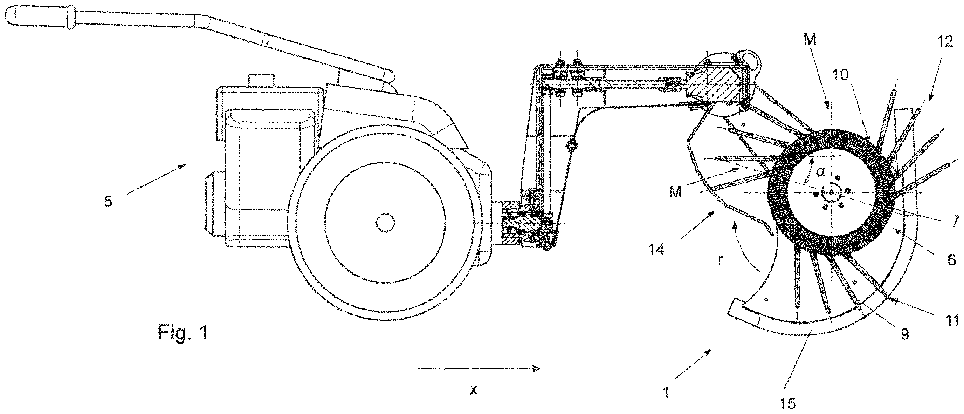

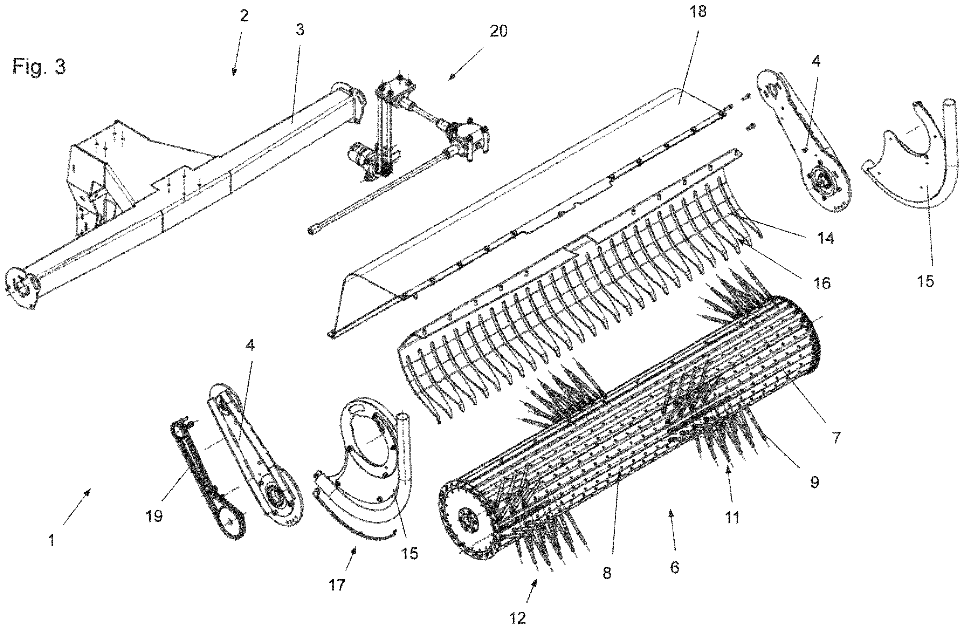

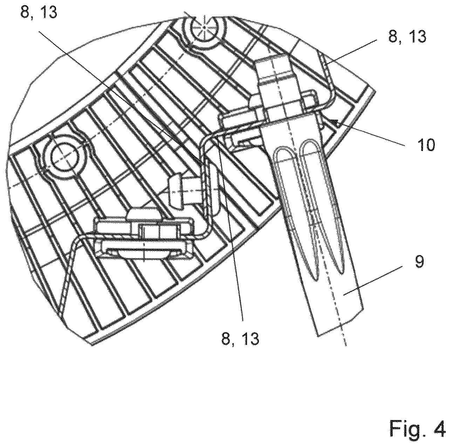

Die in Fig. 1 dargestellte Zeichnung zeigt eine erfindungsgemässe Vorrichtung 1 zum Abheben und anschliessenden lockeren Ablegen des auf dem Boden liegenden Mähguts. Die erfindungsgemässe Vorrichtung 1 ist frontseitig an einer Antriebsmaschine 5 antriebsverbunden angeordnet. Die Bedienperson befindet sich im Betrieb hinter der Holmen geführten Arbeitsmaschine, welche die Vorrichtung 1 vor sich her schiebt und was der Arbeitsfahrtrichtung x entspricht. Die Vorrichtung 1 ist über einen Stutzen 21 des Antriebsstrangs 20 mit der einachsig, Holmen geführten Antriebsmaschine 5 antriebsverbunden, was gut aus Fig. 1 zu entnehmen ist. Die Vorrichtung 1 beinhaltet einen Rahmen 2, wobei der Rahmen 2 einen Hauptträger 3, der sich über die Arbeitsbreite B erstreckt und seitlich davon angeordnete Seitenteile 4 aufweist. Die Vorrichtung 1 beinhaltet eine um eine Längsachse L rotierende Zinkenwalze 6, die sich quer z zur Arbeitsfahrtrichtung x über die Arbeitsbreite B zwischen den beiden Seitenteilen 4 des Rahmens 2 erstreckt. Die Zinkenwalze 6 rotiert vorwärts bzw. entspricht der Arbeitsfahrtrichtung x und weist wie die Antriebsräder der Arbeitsmaschine 5 eine Rotationsrichtung r während des Abhebe- und Ablegevorgangs auf. Die Zinkenwalze 6 beinhaltet eine Walze 7, welche vorzugsweise aus einzelnen, sich längs zur Längsachse L ersteckenden Paneelen 8 gebildet ist. An der Walze 7 sind einzelne Zinken 9 angeordnet, die sich einfach an der Walze 7 befestigen lassen, vorzugsweise mittels eines Gewindes, mit dem die Zinken 9 in die dafür in der Walze 7 vorgesehenen Gewinde eingeschraubt werden, was der Fig. 4 zu entnehmen ist. Die Zinken 9 sind mit einem Nachlaufwinkel α zur Walze 7 bzw. zur Mittelachse M der Walze 7 ausgerichtet. Das heisst, dass die Zinken 9 nicht zentrisch auf die Längsachse L ausgerichtet sind, analog der Mittelachse M, sondern die Zinken 9 verlaufen schräg zur Mittelachse M. Dadurch ist bei der Rotation der Zinkenwalze 6 in Rotationsrichtung r der Zinkenfuss 10 an der Walze 7 der Zinkenspitze 11 immer voraus. In Fig. 3 ist gut ersichtlich, dass die Zinken 9 vorzugsweise in Feldern 12 an der Walze 7 angeordnet sind und dazwischen keine Zinken 9 an der Walze 7 montiert sind. Ein Feld 12 von Zinken 9 zeichnet sich dadurch aus, dass über einen Bereich mehrere aufeinanderfolgende Zinken 9 entlang der Längsachse L und entlang des Umfangs der Walze 7 angeordnet sind und dass nach einem Feld 12 wieder ein Bereich ohne Zinken 9 folgt. Die Felder 12 an einer Walze 7 können gleich oder auch unterschiedlich ausfallen wie sie auch in regelmässigen wie auch unregelmässigen Abständen über die Walze 7 angeordnet sein können.

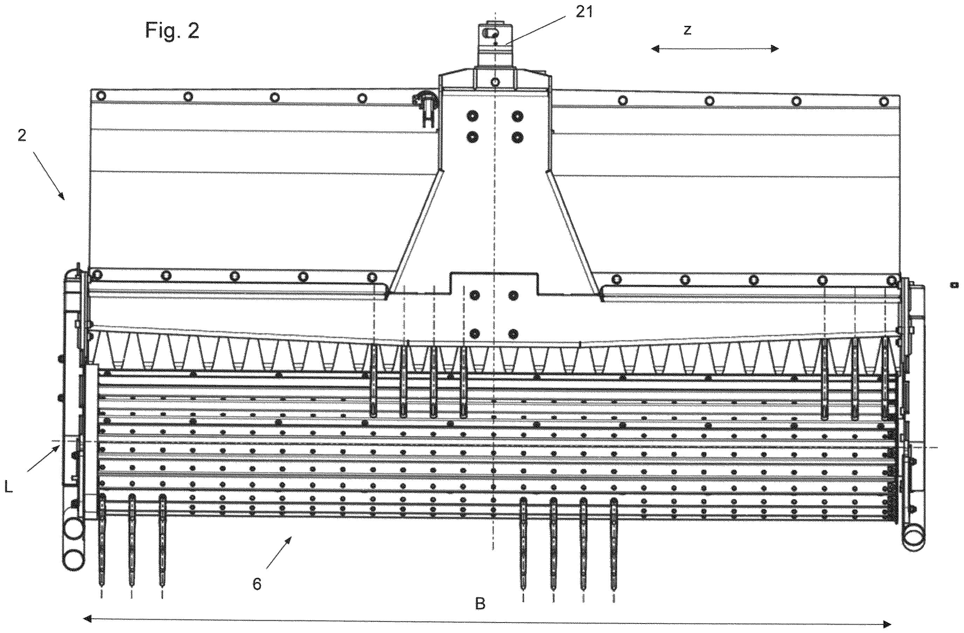

Die Zinken 9 sind vorzugsweise aus Gummi hergestellt. Dies schont die Grasnarbe und gewährleistet durch die elastisch verformbaren Zinken 9 eine optimale Anpassung bzw. Anschmiegen der Zinken 9 an den Boden, wodurch das Mähgut beinahe vollständig vom Boden abgehoben wird. Gut ersichtlich aus Fig. 2 ist, dass die Zinken 9 sich parallele zur Arbeitsfahrtrichtung x erstrecken bzw. in einem 90° Winkel zur Längsachse L verlaufen.

Die Vorrichtung 1 weist zudem vorzugsweise einen Abstreifer 14 auf der in Arbeitsrichtung x hinter der Zinkenwalze 6 angeordnet ist. Dadurch wird das Mähgut das über die in Rotationsrichtung r rotierende Zinkenwalze 6 mit den nachlaufenden Zinken 9 unter der Zinkenwalz 6 durchgefördert und hinter der Zinkenwalze 6 abgehoben wird mit dem Abstreifer 14 von den Zinken 9 abgestreift und wieder locker auf den Boden über die Arbeitsbreite B abgelegt. Der Abstreifer 14 ist vorzugsweise als ein sich über die Arbeitsbreite B ersteckendes Blech ausgebildet, das durchgehende Einschnitte 16 aufweist durch die die Zinken 9 hindurch rotieren bzw. durch die die Zinkenwalze 6 und der Abstreifer 14 zusammen kämmen. Vorzugsweise ist das Blech für den Abstreifer 14 aus einem metallischen Werkstoff oder aus Kunststoff.

Damit die Vorrichtung 1 zum Boden einen konstanten Abstand hat und auch damit die Vorrichtung 1 von der Bedienperson sicher geführt werden kann, weist sie an den Seiten jeweils Stützelemente 15 auf, wobei diese vorzugsweise als Gleitkufen ausgebildet sind, jedoch wären auch Räder durchaus vorstellbar. Als vorteilhaft hat sich gezeigt, wenn die Stützelemente 15 höhenverstellbar ausgebildet sind, wodurch sich eine individuelle Bodenfreiheit der Vorrichtung 1 einstellen lässt. Vorzugweise weist die Gleitkufe 15 an der Unterseite eine einfach zu wechselnde Verschleisskufe 17 auf.

Zum Schutz der Bedienperson weist die Vorrichtung 1 vorzugsweise ein Prallblech 18 auf. Das Prallbelche 18 ist oberhalb des Abstreifers 14 angeordnet und gewährleistet, dass die Bedienperson nicht von hochfliegenden Teilen, wie Steinen oder dergleichen getroffen wird. Vorzugsweise ist das Prallblech aus Plexiglas oder einem ähnlichen transparenten Material, das die Durchsicht auf die Vorrichtung 1 bzw. auf die Zinkenwalze 6 und den Abstreifer 14 ermöglicht.

Die Zinkenwalze 6 wird vorzugsweise über eine Antriebskette 19, welche vorzugsweise an einer der beiden Seitenteile 4 angeordnet ist, angetrieben. Selbstverständlich kann auch ein anderer Antrieb vorgesehen werden. Über den Antriebsstrang 20 der vorzugsweise einen Stutzen 21 zur Verbindung mit der Arbeitsmaschine 5 enthält, wird die Antriebskette 19 zum Antreiben der Zinkenwalze 6 angetrieben.

Um das Gewicht der Vorrichtung 1 möglichst gering zu halten, sind die einzelnen Paneelen 8 der Walze 7 vorzugsweise jeweils aus einem Leichtmetallblech. Die einzelnen Paneelen 8 weisen parallel zur Längsachse verlaufende Abkantungen auf, welche die Paneele 8 und schlussendlich die Walze 7 bzw. die Zinkenwalze 6 versteifen. Die Paneelen 8 werden über ihre parallel zur Längsachse L verlaufenden Schenkel 13 miteinander zu einer zylindrischen Walze 7 zusammengefügt. Jeder Zinken 9 ist senkrecht auf den jeweiligen Schenkel 13 ausgereicht. Damit eine zylindrische Walze 7 gebildet werden kann weisen die Paneelen 8 eine rechtwinklig zur Längsachse verlaufende Krümmung auf bzw. die rechtwinklig zur Längsachse ersteckende Seite der Paneele 8 weist eine Bogenform auf, die einem Kreissegment der Walze 7 entspricht. Vorzugsweise werden die einzelnen Paneelen miteinander verschraubt, verschweisst oder vernietet. Die Abkantungen der Paneelen weisen vorzugsweise jeweils einen Winkel zwischen 45 und 120° auf.

### Bezugszeichenliste

- 1: Vorrichtung
- 2: Rahmen
- 3: Hauptträger
- 4: Seitenteil
- 5: Arbeitsmaschine
- 6: Zinkenwalze
- 7: Walze
- 8: Paneele
- 9: Zinke
- 10: Zinkenfuss
- 11: Zinkenspitze
- 12: Zinkenfeld
- 13: Schenkel der Paneele
- 14: Abstreifer
- 15: Stützelement / Gleitkufe
- 16: Einschnitt
- 17: Verschleisskufe
- 18: Prallblech
- 19: Antriebskette
- 20: Antriebsstrang
- 21: Stutzen

- x: Arbeitsfahrtrichtung
- z: quer zur Arbeitsfahrtrichtung
- L: Längsachse
- B: Arbeitsbreite
- M: Mittelachse
- r: Rotationsrichtung
- α: Nachlaufwinkel

## Patentansprüche

1. Vorrichtung (1) zum Abheben und anschliessenden lockeren Ablegen des auf dem Boden liegenden Mähguts zum frontseitigen Anbau und antriebsverbunden an einer einachsigen, Holmen geführten Arbeitsmaschine (5) beinhaltend einen Rahmen (2), wobei der Rahmen (2) einen sich quer (z) zur Arbeitsfahrtrichtung (x) über die Arbeitsbreite (B) erstreckenden Hauptträger (3) und jeweils seitlich daran angeordnete Seitenteile (4) aufweist, eine zwischen den Seitenteilen (4) angeordnete sich quer (z) zur Arbeitsfahrtrichtung (x) über die Arbeitsbreite (B) erstreckende, um eine Längsachse (L) rotierende Zinkenwalze (6), wobei die Zinkenwalze (6) eine Walze (7) mit daran angeordneten Zinken (9) aufweist, wobei die Zinken (9) unverstellbar an der Walze (7) angeordnet sind um das Mähgut vom Boden abzuheben, jeweils seitlich der Walze (7) angeordnete Stützelemente (15) und vorzugsweise einen sich über die Arbeitsbreite (B) ersteckenden Abstreifer (14) zum Abstreifen und lockeren Ablegen des mit den Zinken (9) abgehobenen Mähguts, **dadurch gekennzeichnet, dass** die Zinken (9) mit einem Nachlaufwinkel (a) an der Walze (7) angeordnet sind.

2. Vorrichtung (1) nach Anspruch 1, **dadurch gekennzeichnet, dass** die Zinken (9) nicht ins Zentrum der Walze (7) gerichtet sind bzw. schräg zur Mittelachse (M) angeordnet sind.

3. Vorrichtung (1) nach einem der Ansprüche 1 oder 2, **dadurch gekennzeichnet, dass** die Zinken (9) in einem geneigten Nachlaufwinkel (a) zur Mittelachse (M) angeordnet sind.

4. Vorrichtung (1) nach einem der Ansprüche 1 bis 3, **dadurch gekennzeichnet, dass** die Zinken (9) in Feldern (12) an der Walze (7) angeordnet sind.

5. Vorrichtung (1) nach einem der Ansprüche 1 bis 4, **dadurch gekennzeichnet, dass** die Zinken (9) aus Kunststoff sind, vorzugsweise einem Elastomer, speziell bevorzugt Gummi.

6. Vorrichtung (1) nach einem der Ansprüche 1 bis 5, **dadurch gekennzeichnet, dass** die Stützelemente (15) als Gleitkufen ausgebildet sind.

7. Vorrichtung (1) nach einem der Ansprüche 1 bis 6, **dadurch gekennzeichnet, dass** die Stützelemente (15) höhenverstellbar ausgebildet sind.

8. Vorrichtung (1) nach einem der Ansprüche 1 bis 7, **dadurch gekennzeichnet, dass** die Stützelemente (15) mit einer Verschleisskufe (17) ausgestattet sind.

9. Vorrichtung (1) nach einem der Ansprüche 1 bis 8, **dadurch gekennzeichnet, dass** die Walze (7) mindestens eine, vorzugsweise mehrere ringsum angeordnete, parallel zur Längsachse (L) verlaufende Abkantungen aufweisende, längs über die Arbeitsbereite (B) erstreckende Paneele (8) beinhaltet.

10. Vorrichtung (1) nach Anspruch 9, **dadurch gekennzeichnet, dass** die Paneele (8) aus Metallblech, vorzugsweise Leichtmetallblech gebildet ist.

11. Vorrichtung (1) nach einem der Ansprüche 1 bis 10, **dadurch gekennzeichnet, dass** oberhalb des Abstreifers (14) ein Prallblech (18) zum Schutz der Bedienperson angeordnet ist

12. Verfahren zum Abheben und anschliessendem lockeren Ablegen des auf dem Boden liegenden Mähguts mit einer an einer einachsigen, Holmen geführten Arbeitsmaschine (5), frontseitig angebauten und antriebsverbundenen Vorrichtung (1), vorzugswiese nach einem der Ansprüche 1 bis 11, wobei eine in Arbeitsfahrtrichtung (x) gesehen vor der Arbeitsmaschine (5) angeordnete in Arbeitsfahrtrichtung (x) rotierende Zinkenwalze (6) das Mähgut über die Arbeitsbreite (B) vom Boden abhebt, **dadurch gekennzeichnet, dass** das Abheben gegen hinten, unter der Zinkenwalze (6) durch, in Richtung der Arbeitsmaschine (5) erfolgt, und vorzugsweise durch den in Arbeitsfahrtrichtung (x) gesehen hinter der Zinkenwalze (6) angeordneten Abstreifer (14) das Mähgut von der Zinkenwalze (6) abgestreift, und im hinteren untern Bereich der Zinkenwalze ohne aufzuwickeln wieder losgelassen und locker über die komplette Arbeitsbreite (B) abgelegt wird.

13. Verfahren nach Anspruch 12, **dadurch gekennzeichnet, dass** die Rotationsrichtung (r) der Zinkenwalze (6) und die Arbeitsfahrtrichtung (x) gleichgerichtet sind.

14. Verfahren nach einem der Ansprüche 12 oder 13, **dadurch gekennzeichnet, dass** das wieder abgelegte Mähgut mit den Rädern der Arbeitsmaschine (5) überfahren wird.

15. Verfahren nach einem der Ansprüche 12 bis 14, **dadurch gekennzeichnet, dass** sich die Zinken (9) der Zinkenwalze (6) während des Überstreifens über den Boden und des Abhebens des Mähguts durch das Anliegen auf dem Boden elastisch verformen.
